# EUROPEAN PATENT SPECIFICATION

(11) **EP 1 500 690 B1**
(45) Date of publication and mention of the grant of the patent: **12.07.2006**
(21) Application number: 03016847.0
(22) Date of filing: 24.07.2003
(51) Int. Cl.: C09D 163/00, C08K 3/00

(54) **Composition having sealing and sound dampening properties and methods related thereto**
Zusammensetzung mit Schalldämpfenden und Dichtungseigenschaften und diesbezügliche Methoden
Composition possédant des propriétés insonorisantes et d'étanchéité et méthodes afférantes

(43) Date of publication of application: 26.01.2005
(73) Proprietor: PPG Industries Ohio, Inc., Cleveland, OH 44111 (US)
(72) Inventor: Desai, Umesh C., Wexford, Pennsylvania 15090 (US); Hartman, Marvis E., Pittsburgh, Pennsylvania 15238 (US); Palermo, Anthony C., Gibsonia, Pennsylvania 15044 (US)
(74) Representative: Sternagel, Fleischer, Godemeyer & Partner

(56) References cited:
- WO-A-99/16840
- US-A- 6 153 709
- US-B1- 6 521 706

## Description

### FIELD OF THE INVENTION

The present invention relates to compositions having sealing and sound dampening properties and related processes. In particular, the present invention relates to compositions having sealing and sound dampening properties that can be applied in a body shop via spraying.

### BACKGROUND & DISCUSSION

Sealants and sound dampeners typically are applied to a variety of areas in automobile bodies such as interior floor pans, firewalls, decklids, and between the inner and outer panels of doors. Conventionally, sealants have comprised plastisols that can be applied between and upon metal seams, welds and within hollow cavities of autobodies. Generally, sealants are used to impart structural integrity and to create a barrier against dirt and exhaust gases. Sound dampeners typically are pre-cut pieces of fibrous asphaltic material or aluminum constrained butylene rubber used to dampen road and engine noise that can be transmitted through the autobody substrates.

A sprayable coating composition having vibration and harsh noise reduction or absorption properties is disclosed in International Application WO 99/16840. The sprayable coating composition comprises a mixture of flexible epoxy resins and rigid epoxy resins. The flexible epoxy resins are defined as those having elastomeric chains in the backbone; and the rigid epoxy resins are defined as those epoxy resins having bisphenol moieties in the backbone. The mixture of the flexible and rigid epoxy resins should be such that the peak glass transition temperature of the composition is 10°C or greater.

Conventionally, sealants and sound dampeners are applied to some automotive parts in the paint shop area of an automobile assembly plant which is typically located downstream from the electrocoat tank in the automotive coating process. The application of sealants and sound dampeners in the paint shop area can result in fingerprints, dirt and/or overspray on the automotive part which must be removed prior to subsequent application of primer and/or top coatings.

The body shop is the area of an automobile assembly plant which is located upstream from and can include the electrocoat tank. In a body shop, any dirt, fingerprints, and/or overspray on the automotive part resulting from the application of sealants and sound dampeners could be washed away in the pretreatment wash cycle. It, therefore, would be advantageous to provide a composition having sealing and sound dampening properties suitable for application in the body shop area of the automotive assembly plants.

### SUMMARY OF THE INVENTION

In one embodiment, the present invention provides a composition having improved sealing and sound dampening properties comprising:
(a) one or more polyepoxides comprising at least two epoxide groups per molecule;
(b) a thermoplastic polyester polymer;
(c) a curing agent adapted to react with the polyepoxides;
(d) inorganic particles having an oil absorption value of less than 70 as determined in accordance with ASTM D 281-95; and
(e) inorganic microparticles different from the inorganic particles (d), the inorganic microparticles having an average particle size prior to incorporation into the composition ranging from 0.5 to 200 microns.

In another embodiment, the present invention provides a multilayer composite comprising a weldable primer layer formed from a weldable primer composition, and a second layer having improved sealing and sound dampening properties formed from a second composition over at least a portion of the weldable primer layer, the second composition being defined as above.

Additionally, the present invention provides a coated metallic substrate comprising:
a metallic substrate;
a weldable primer layer formed from a weldable primer composition deposited over at least a portion of the substrate; and
a second layer formed from a second composition having sealing and sound dampening properties deposited over at least a portion of the weldable primer layer, the second being defined as above.

In another embodiment, the invention provides a method for forming a coating having sealing and sound dampening properties on a metallic substrate comprising the steps of:
(a) providing a metallic substrate having two major surfaces,
(b) applying a composition as defined above to at least a portion of one of the major surfaces of the substrate; and
(c) curing the applied composition, wherein the coated substrate of step (c) has a sound dampening value greater than 0.030 Oberst dissipation factor as measured at 200 Hz at 25°C in accordance with ASTM E-756-98.

### DETAILED DESCRIPTION OF THE INVENTION

Other than in the operating examples, or where otherwise indicated, all numbers expressing quantities of ingredients, reaction conditions and so forth used in the specification and claims are to be understood as being modified in all instances by the term "about". Accordingly, unless indicated to the contrary, the numerical parameters set forth in the following specification and attached claims are approximations that may vary depending upon the desired properties sought to be obtained by the present invention. At the very least, and not as an attempt to limit the application of the doctrine of equivalents to the scope of the claims, each numerical parameter should at least be construed in light of the number of reported significant digits and by applying ordinary rounding techniques.

Notwithstanding that the numerical ranges and parameters setting forth the broad scope of the invention are approximations, the numerical values set forth in the specific examples are reported as precisely as possible. Any numerical values, however, inherently contain certain errors necessarily resulting from the standard deviation found in their respective testing measurements.

Also, it should be understood that any numerical range recited herein is intended to include all sub-ranges subsumed therein. For example, a range of "1 to 10" is intended to include all sub-ranges between and including the recited minimum value of 1 and the recited maximum value of 10, that is, having a minimum value equal to or greater than 1 and a maximum value of equal to or less than 10.

The present invention is directed to a composition having sealing and sound dampening properties. The composition comprises one or more polyepoxides comprising two or more epoxide groups per molecule, a thermoplastic polyester polymer, a curing agent adapted to react with the previously mentioned polyepoxide, inorganic particles having an oil absorption value of less than 70, and inorganic microparticles different from the previously mentioned inorganic particles, the inorganic microparticles having an average particle size prior to incorporation into the composition ranging from 0.5 to 200 microns.

The one or more polyepoxides comprise two or more epoxide groups per molecule. As used herein, the term "polyepoxide" refers to any epoxide group-containing compound having two or more epoxide groups per molecule. The polyepoxides in the present invention can be saturated or unsaturated, cyclic or acyclic, aliphatic, alicyclic, aromatic or heterocyclic and can comprise substituents such as halogen, hydroxyl and ether groups. Polyepoxides containing the aforementioned substituent groups can be obtained via well known methods.

Several types of polyepoxides can be used in the present invention for example, polyglycidyl ethers of polyhydric alcohols, polyglycidyl esters of polycarboxylic acids, inter alia, can be employed. Epoxy polyethers can be obtained by reacting an epihalohydrin, such as epichlorohydrin or epibromohydrin, with a polyphenol in the presence of an alkali. Suitable polyphenols include resorcinol, catechol, hydroquinone, bis(4-hydroxyphenyl)-2,2-propane also known as bisphenol A, bis(4-hydroxyphenyl)-1,1-isobutane, 4,4-dihydroxybenzophenone, bis(4-hydroxyphenol)-1,1-ethane, bis(2-hydroxyphenyl)-methane, and 1,5-hydroxynaphthalene, and the diglycidyl ether of bisphenol A.

Suitable polyhydric alcohols are ethylene glycol, diethylene glycol, triethylene glycol, 1,2-propylene glycol, 1,4-butylene glycol, 1,5-pentanediol, 1,2,6-hexanetriol, glycerol, trimethylolpropane, and bis(4-hydroxycyclohexyl)-2,2-propane.

Suitable polyglycidyl esters of a polycarboxylic acids can be produced by the reaction of epichlorohydrin or similar epoxy compound with an aliphatic or aromatic polycarboxylic acid such as oxalic acid, succinic acid, glutaric acid, terephthalic acid, 2,6-naphthalene dicarboxylic acid, and dimerized linoleic acid.

Also suitable are the polyepoxides derived by epoxidating an olefinically unsaturated alicyclic compound. Oxygen and selected metal catalysts, perbenzoic acid, acid-aldehyde monoperacetate, or peracetic acid can be used for the epoxidation.. Examples of these polyepoxides include epoxy alicyclic ethers and esters which are well known in the art.

Polyepoxides which contain oxyalkylene groups in the epoxy molecule are also suitable for use in the present invention: The oxyalkylene groups can be pendant to the main molecular chain of the polyepoxide or part of the main chain itself, and have the general formula: -O-R, where R is alkyl and pendant or links the ether oxygen with the rest of the chain. The chain length of the oxyalkylene group, the nature of the epoxy, and the degree of water solubility desired determines the proportion of oxyalkylene groups in the polyepoxide.

Also suitable are the epoxy novolac resins obtained by reacting an epihalohydrin with the condensation product of aldehyde and monohydric or polyhydric phenols. For example, an epoxy novolac resin can be formed from the reaction of epichlorohydrin and phenol-formaldehyde condensate. Mixtures of polyepoxides can be used as well.

The polyepoxide (a) can be present in the composition of the present invention in an amount ranging from 15 to 50 weight percent, usually 20 to 50 weight percent, and typically 25 to 45 weight percent, based on the total weight of the composition. Generally, the epoxide equivalent weight can range from 70 to 4,000.

The composition of the present invention also includes a thermoplastic polyester polymer (b). The term "polyester" as used herein with respect to the thermoplastic polyester polymer is intended to include resins which contain oil or fatty acid modifications, for example, alkyd resins. Suitable thermoplastic polyester polymers are preferably substantially free of aromatic units. Typically the thermoplastic polyester polymers contain no more than 10 percent by weight of aromatic units, the percentage based upon the total weight of all of the ingredients used to prepare the polyester. As used herein, an "aromatic unit" is intended to mean one or more aromatic rings such as those generally derived from aromatic acids or anhydrides, for example, phthalic acid, isophthalic acid or terephthalic acid.

The thermoplastic polyester polymer usually is insoluble in the previously mentioned polyepoxide (a). In other words, when the thermoplastic polyester polymer is mixed with the polyepoxide, a hazy, heterogeneous phase will result. The term "thermoplastic" connotes that the polyester is substantially non-reactive with the other components present in the composition.

In a particular embodiment of the present invention, the thermoplastic polyester polymer is substantially saturated. The saturated polyesters can contain some percentage of unsaturated units provided that the thermoplastic polyester is not reactive with the other components of the curable sound dampening composition. For example, the saturated thermoplastic polyester may contain 10 percent or less of unsaturated units by weight, the percentage being based on the total weight of all the ingredients used to prepare the thermoplastic polyester.

Suitable thermoplastic polyesters can be prepared from polyfunctional acids and polyhydric alcohols by methods well known in the art. Non-limiting examples of suitable polyfunctional acids include adipic acid, azelaic acid, glutaric acid, phthalic acid, sebacic acid and the anhydrides thereof. Unsaturated polyfunctional acids such as maleic acid and fumaric acid can be used to introduce unsaturation if desired. Suitable non-limiting examples of polyhydric alcohols include ethylene glycol, propylene glycol, diethylene glycol, dipropylene glycol, butylene glycol, glycerol, trimethylolpropane, pentaerythritol and sorbitol.

Generally, when the thermoplastic polyester is prepared from the compounds described above, one or more of the diols and one or more of the diacids is charged into a reaction vessel. The reaction vessel is heated to a temperature ranging from about 200°C to 300°C, and excess water is removed via distillation. Solvents such as xylene or toluene can be employed in the reaction mixture to help remove water by azeotropic distillation. An esterification catalyst such as dibutyltin oxide or butyl stannoic acid can be used to increase the rate of reaction. Similarly, functional derivatives of the diacids such as esters anhydrides or acid chlorides can be employed.

The thermoplastic polyester polymer can be present in the inventive composition in an amount ranging from 3 to 30 weight percent, often from 5 to 25 weight percent, and typically from 7 to 20 weight percent, based on the total formula weight of the composition. Additionally, the thermoplastic polyester polymer can have a weight average molecular weight of less than 10,000, and typically from 400 to 8,000 as determined by gel permeation chromatography (GPC) using a differential refractometer. The number average molecular weight of the thermoplastic polyester polymer can range from 400 to 5,000.

The composition of the present invention having sealing and sound dampening properties further comprises a curing agent (c) capable of reacting with the previously mentioned polyepoxides. Suitable curing agents include, for example, aliphatic, cycloaliphatic and aromatic polyfunctional amines and polyamides.

Examples of suitable amines include ethylene diamine, diethylene triamine, triethylene tetraamine, tetraethylene pentamine, 1,4-diaminobutane; 1,3-diaminobutane, hexamethylene diamine, 3-(N-isopropylamino) propylamine, diaminocyclohexane, and polyoxypropyleneamines. Aromatic amines can also be used in the present invention. Examples of suitable aromatic amines include metaphenylene diamine, p, p'-methylene dianiline, and 1,4-aminonaphthalene. Latent curing agents, i.e., those which are inactive until activated by the application of heat, can also be used. Examples of latent curing agents include boron trifluoride monoethylamine complex, boron trifluoride diethylamine complex, boron trifluoride triethylamine complex, boron trifluoride pyridine complex, boron trifluoride benzyldimethylamine complex, boron trifluoride benzylamine, boron trifluoride etherate, and dicyandiamide.

Suitable polyamide curing agents include those derived from fatty acids, dimerized fatty acids, polymeric fatty acids and, aliphatic polyamines. Examples of suitable polyamide curing agents are VERSAMID® 220 and 125 available from Cognis Corporation.

The curing agent (c) can be present in the composition of the present invention in an amount ranging from 1 to 50 percent by weight, often from 3 to 15 percent by weight, and typically from 0.5 to 5 percent by weight, based on the total weight of the composition.

The composition of the present invention having sealing and sound dampening properties also comprises inorganic particles (d). The inorganic particles can have an oil absorption value of less than or equal to 70, and typically less than or equal to 60. For purposes of the present invention, the "oil absorption value" of the inorganic particles should be understood as that determined in accordance with ASTM D 281-95, Standard Test Method for Oil Absorption of Pigment by Spatula Rub-Out.

The inorganic particles can include inorganic materials such as mica, calcium carbonate, dolomite, talc, and calcium metasilicate, for example, wollastonite. The inorganic particles can have a variety of morphologies, including a spherical morphology, an irregular morphology, a platy morphology, a needle shaped morphology, or mixtures thereof. Also, the inorganic particles can have a particle size prior to incorporation into the composition ranging from 5 to 200 microns, and typically from 20 to 80 microns.

The inorganic particles (d) can be present in the composition of the present invention in an amount ranging from 5 to 65 weight percent, often from 15 to 50 weight percent, and typically from 20 to 40 weight percent, based on the total weight of the composition.

The composition of the present invention having sealing and sound dampening properties comprises inorganic microparticles (e) which are different from and in addition to the inorganic particles described above. Suitable inorganic microparticles include colloidal silica, calcium modified precipitated silica, ion exchanged silica gel, colloidal alumina, and mixtures thereof. Prior to incorporation into the composition, the average particle size of such inorganic microparticles ranges from 0.5 to 200 microns, usually from 3 to 150 microns, and typically from 10 to 100 microns. The inorganic microparticles can be present in the composition of the present invention in an amount sufficient to provide corrosion resistance properties as measured in accordance with Chrysler Test Method LP-463PB-10-01 which are superior to the corrosion resistance properties of the same composition which does not contain said inorganic microparticles, the inorganic microparticles having an average particle size prior to incorporation into the composition ranging from 0.5 to 200 microns. Preferably the amount ranges from 0.1 to 5 weight percent, and typically from 0.5 to 3 weight percent based on the total weight of the composition.

A variety of optional ingredients also can be included in the composition of the present invention. For example, the present invention can include pigments, reinforcement materials, thixotropes, plasticizers, extenders, stabilizers, antioxidants, at least one polyglycidyl ester of a polycarboxylic acid different from the polyepoxide (a), at least one alkylene diene copolymer, and one or more metallic compounds.

In one embodiment of the present invention, the composition of the present invention having sealing and sound dampening properties further comprises a polyglycidyl ester of a polycarboxylic acid different from the polyepoxide (a). An example of a polyglycidyl ester of a polycarboxylic acid is the reaction product of an epihalohydrin and a dimerized fatty acid such as the reaction product of epichlorohydrin and dimerized linoleic acid. The polyglycidyl ester can be present in the composition in an amount of up to 20 weight percent, and typically from 2 to 16 weight percent, based on the total weight of the composition.

The composition of the present invention having sealing and sound dampening properties optionally can comprise an alkylene diene copolymer, for example, an ethylene propylene diene terpolymer. The weight average molecular weight of suitable alkylene diene copolymers can range from 1,000 to 15,000, and typically from 3,000 to 10,000 as determined by GPC using a polystyrene standard. The number average molecular weight of the alkylene diene copolymer can range from 6,000 to 7,000. When used, the alkylene diene copolymer can be present in the composition of the present invention in an amount of up to 10 weight percent, and typically from 1 to 7 weight percent based on the total weight of the composition.

In one particular embodiment of the present invention, the composition of the present invention comprises one or more metallic compounds. The metallic compound(s) suitable for use in the present invention comprise a metal cation and a counterion, i.e., an anion. Suitable metal cations include those selected from zinc, aluminum, magnesium, calcium, strontium, titanium, zirconium, cesium, and yttrium. Suitable anions include those selected from phosphates, polyphosphates, phosphites, molybdates, sulfonates, tungstates, borates, borosilicates, silicates, and cyanamides. In one embodiment of the present invention, the metal compound is selected from a zinc compound, a calcium compound, and mixtures thereof. The metallic compound(s) can be present in the inventive composition in an amount ranging from 0.1 to 5 weight percent, often from 0.3 to 4 weight percent, and typically from 0.5 to 3 weight percent based on the total weight of the composition.

Often times, the composition of the present invention will be applied to a metallic substrate. As used herein, "substrate" refers to a bare (i.e., uncoated or untreated) substrate, to a treated substrate, or, alternatively, to a previously coated substrate. Also the "substrate" can include a metal substrate which has been previously treated and/or coated with a combination of pretreatments, conversion coatings and/or primer coatings. Metallic substrates used in the present invention encompass a number of metallic substrates known in the art, including, ferrous metals, non-ferrous metals and combinations thereof. Suitable ferrous metals include iron, steel, and alloys thereof. Nonlimiting examples of useful steel materials include cold rolled steel, galvanized (zinc coated) steel, electrogalvanized steel, stainless steel, pickled steel, zinc-iron alloy such as GALVANNEAL, GALVALUME and GALFAN zinc-aluminum alloys, and combinations thereof. Useful non-ferrous metals include aluminum, zinc, magnesium and alloys thereof. Combinations or composites of ferrous and non-ferrous metals can also be used.

The composition of the present invention having sealing and sound dampening properties can be applied to a metallic substrate using any of a variety of application methods known in the art. For example, the composition can be applied to a metallic substrate via spray and extrusion techniques.

The application viscosity of the sealing and sound dampening compositions of the present invention can be less than 120 seconds, and typically less than 100 seconds, for 20 grams of the composition extruded by a Caster-Sievers rheometer (having a 0.125 inch diameter and a 2 inch long orifice) at 40 psi, and a composition temperature after extrusion of 77°F (25°C).

After application as described above, the composition of the present invention is cured. The inventive composition can be cured at ambient temperature, a combination of ambient and thermal curing conditions, or at thermal conditions only. Specific curing times and temperatures depend on the application conditions and the nature of the curing agent(s). For example, in a "real life" application, the composition of the present invention can be cured in electrocoat and/or top coat curing ovens in an automotive assembly plant.

The cured composition can have a sound dampening value greater than 0.030, typically greater than 0.080 Oberst dissipation factor. For purposes of the present invention, Oberst dissipation factor is measured at 200 Hz and 25°C in accordance with ASTM E-756-98.

As previously mentioned, one of the major benefits of the composition of the present invention is that it can be applied in a body shop area of an automotive assembly plant. By applying the composition in the body shop, any dirt, fingerprints, and/or overspray on an automotive part can be washed away in the pretreatment wash cycle.

Depending on the end use of the automotive part onto which the composition of the present invention is applied, it may be desirable to enhance the corrosion resistance of a metallic substrate prior to application of the composition.

In one embodiment of the present invention, the corrosion resistance can be enhanced by applying the composition of the present invention over a layer of weldable primer, which has previously been applied to the substrate. Weldable primers are well known in the art for providing corrosion resistance. Nonlimiting examples of weldable primers are those disclosed in U.S. Patent Nos. 5,580,371; 5,652,024; 5,584,946; 3,792,850, and GB Patent No. 2,237,812A.

In one particular embodiment of the present invention, the weldable primer layer can be formed from a weldable primer composition comprising (A) a resinous binder comprising (1) at least one functional group containing polymer, and (2) at least one curing agent having functional groups that are reactive with the functional groups of the functional group containing polymer (1); and (B) at least one electroconductive pigment dispersed in the resinous binder (A). The weldable primer typically is formed from a thermoset composition which is weldable when deposited and cured on a metallic substrate.

In the aforementioned weldable primer composition, the polymer (1) can comprise functional groups which include but are not limited to hydroxyl, amine, carbamate, carboxyl, epoxy, and urea groups.

Typically, the functional group-containing polymer comprises one or more epoxy group-containing polymers and/or one or more phosphatized epoxy group-containing polymers.

Useful epoxy group-containing polymers have at least one epoxy or oxirane group in the molecule, such as polyglycidyl ethers of polyhydric alcohols. Useful polyglycidyl ethers of polyhydric alcohols can be formed by reacting epihalohydrins such as epibromohydrin, dichlorohydrin and epichlorohydrin with polyhydric alcohols, such as dihydric alcohols, in the presence of an alkali condensation and dehydrohalogenation catalyst. Suitable alkali condensation and dehydrohalogenation catalyst include sodium hydroxide or potassium hydroxide.

Suitable polyhydric alcohols can be aromatic, aliphatic or cycloaliphatic alcohols. Nonlimiting examples of suitable aromatic polyhydric alcohols include phenols that are preferably at least dihydric phenols. Other useful aromatic polyhydric alcohols include dihydroxybenzenes, for example resorcinol, pyrocatechol and hydroquinone; bis(4-hydroxyphenyl)-1,1-isobutane; 4,4-dihydroxybenzophenone; bis(4-hydroxyphenyl)-1,1-ethane; bis(2-hydroxyphenyl)methane; 1,5-hydroxynaphthalene; 4-isopropylidene bis(2,6-dibromophenol); 1,1,2,2-tetra(p-hydroxy phenyl)-ethane; 1,1,3-tris(p-hydroxy phenyl)-propane; novolac resins; bisphenol F; long-chain bisphenols; and 2,2-bis(4-hydroxyphenyl)propane, i.e., bisphenol A.

Nonlimiting examples of aliphatic polyhydric alcohols include glycols such as ethylene glycol, diethylene glycol, triethylene glycol, 1,2-propylene glycol, 1,4-butylene glycol, 2,3-butylene glycol, pentamethylene glycol, polyoxyalkylene glycol; polyols such as sorbitol, glycerol, 1,2,6-hexanetriol, erythritol and trimethylolpropane; and mixtures thereof. An example of a suitable cycloaliphatic alcohol is cyclohexanedimethanol.

The epoxy group-containing polymer typically has at least two epoxy groups per molecule and aromatic or cycloaliphatic functionality which can improve adhesion to a metal substrate.- Further, the epoxy group-containing polymer can have a number average molecular weight ("Mn") ranging from 220 to 25,000, as determined by gel permeation chromatography using a polystyrene standard.

Useful epoxy group-containing polymers can include those disclosed in U.S. Patent Nos. 5,294,265; 5,306,526 and 5,653,823, which are hereby incorporated by reference. Other useful epoxy group-containing materials can include epoxy-functional acrylic polymers, glycidyl esters of carboxylic acids and mixtures thereof. Examples of suitable commercially available epoxy group-containing polymers can include those which are available from Shell Chemical Company under the tradename EPON® (e.g., EPON® 836, EPON® 828, EPON® 1002F and EPON® 1004F).

Phosphatized group-containing polymers typically comprise a reaction product of an epoxy group-containing polymer with a compound containing phosphorus acid groups. Usually, the resulting reaction product comprises reactive functional groups.

The compound containing phosphorus acid groups which is reacted with the epoxy group-containing polymer can comprise phosphonic acids, phosphorous acid, phosphoric acids (which are typically employed) including super- and poly-, and mixtures thereof.

Examples of suitable phosphonic acids include those having at least one group of the structure:

―R―PO―(OH)₂

where R is -C-, usually CH₂, and typically O-CO-(CH₂)₂-. Nonlimiting examples of suitable phosphonic acids include 1-hydroxyethylidene-1,1-diphosphonic acid, methylene phosphonic acids, and alpha-aminomethylene phosphonic acids containing at least one group of the structure: 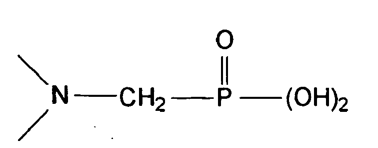 such as (2-hydroxyethyl)aminobis(methylene phosphonic) acid, isopropylaminobis(methylenephosphonic) acid and other aminomethylene phosphonic acids disclosed in U.S. Patent No. 5,034,556 at column 2, line 52 to column 3, line 43, which is hereby incorporated by reference.

Other useful phosphonic acids include alpha-carboxymethylene phosphonic acids containing at least one group of the structure:

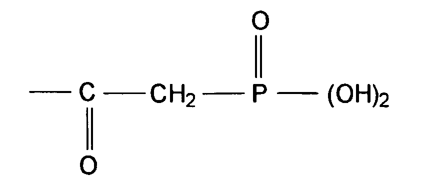

Nonlimiting examples of suitable phosphonic acids can include benzylaminobis(methylene phosphonic) acid, cocoaminobis(methylene phosphonic) acid, triethylsilylpropylamino(methylene phosphonic) acid and carboxyethyl phosphonic acid.

The equivalent ratio of the compound containing phosphorus acid groups to epoxy group-containing polymer can be within the range of 0.3 to 5.0:1, usually 0.5 to 3.5:1. The epoxy group-containing polymer and the compound-containing phosphorus acid groups can be reacted together by any method known to those skilled in the art.

The functional groups associated with the reaction product of the epoxy group-containing polymer and the compound-containing phosphorus acid groups are hydroxyl groups including acidic hydroxyls or hydroxyl groups and epoxy groups depending on the equivalent ratio of the compound containing phosphorus acid groups to epoxy group-containing polymer.

The resinous binder of the weldable primer further comprises (2) a curing agent having functional groups that are reactive with the functional groups of the polymer (1) described above. The curing agent (2) can be selected from at least one of aminoplasts, polyisocyanates, including blocked isocyanates, polyacids, organometallic acid-functional materials, polyamines, polyamides and mixtures of any of the foregoing depending on the identity of the functional groups of the polymer (1).

Useful aminoplasts can be obtained from the condensation reaction of formaldehyde with an amine or amide. Nonlimiting examples of suitable amines or amides include melamine, urea and benzoguanamine.

Although condensation products obtained from the reaction of alcohols and formaldehyde with melamine, urea or benzoguanamine are most common, condensates with other amines or amides can be used. For example,' aldehyde condensates of glycoluril, which yield a high melting crystalline product useful in powder coatings, can be used. Formaldehyde is the most commonly used aldehyde, but other aldehydes such as acetaldehyde, crotonaldehyde, and benzaldehyde can also be used.

The aminoplast can contain imino and methylol groups. In certain instances, at least a portion of the methylol groups can be etherified with an alcohol to modify the cure response. Any monohydric alcohol like methanol, ethanol, n-butyl alcohol, isobutanol, and hexanol can be employed for this purpose. Nonlimiting examples of suitable aminoplast resins are commercially available from Cytec Industries, Inc. under the tradename CYMEL® and from Solutia, Inc. under the trademark RESIMENE®. Specific examples of suitable aminoplasts include CYMEL® 385 (for water-based compositions), CYMEL® 1158 imino-functional melamine formaldehyde condensates, and CYMEL® 303.

Other curing agents suitable for use in the weldable primer include polyisocyanate curing agents. As used herein, the term "polyisocyanate" is intended to include blocked (or capped) polyisocyanates as well as unblocked polyisocyanates. The polyisocyanate can be aliphatic, aromatic, or a mixture of the foregoing. Although higher polyisocyanates such as isocyanurates of diisocyanates are often used, diisocyanates can be used. Higher polyisocyanates also can be used in combination with diisocyanates. Isocyanate prepolymers, for example reaction products of polyisocyanates with polyols can also be used. Mixtures of polyisocyanate curing agents can be used.

If the polyisocyanate is blocked or capped, any suitable aliphatic, cycloaliphatic, or aromatic alkyl monoalcohol known to those skilled in the art can be used as a capping agent for the polyisocyanate. Suitable capping agents include oximes and lactams.

Other useful curing agents comprise blocked polyisocyanate compounds such as, for example, the tricarbamoyl triazine compounds described in detail in U.S. Patent No. 5,084,541, which is incorporated herein by reference.

Suitable curing agents are described in U.S. Patent No. 4,346,143 at column 5, lines 45-62 and include blocked or unblocked di- or polyisocyanates such as toluene diisocyanate blocked with caprolactam. A toluene diisocyanate blocked with caprolactam is commercially available from Bayer Corporation as DESMODUR® BL 1265.

Suitable polyacid curing agents include acid group-containing acrylic polymers prepared from an ethylenically unsaturated monomer containing at least one carboxylic acid group and at least one ethylenically unsaturated monomer that is free from carboxylic acid groups. Such acid functional acrylic polymers can have an acid number ranging from 30 to 150. Acid functional group-containing polyesters can be used as well. The above-described polyacid curing agents are described in further detail in U.S. Patent No. 4,681,811 at column 6, line 45 to column 9, line 54, which is incorporated herein by reference.

Other suitable curing agents include organometallic complexed materials, for example, stabilized ammonium zirconium carbonate solution commercially available from Magnesium Elektron, Inc. as BACOTE™ 20, stabilized ammonium, zirconium carbonate, and a zinc-based polymer crosslinking agent commercially available from Ultra Additives Inc. as ZINPLEX 15.

Nonlimiting examples of suitable polyamine curing agents include primary or secondary diamines or polyamines in which the radicals attached to the nitrogen atoms can be saturated or unsaturated, aliphatic, alicyclic, aromatic, aromatic-substituted-aliphatic, aliphatic-substituted-aromatic, and heterocyclic. Nonlimiting examples of suitable aliphatic and alicyclic diamines include 1,2-ethylene diamine, 1,2-propylene diamine, 1,8-octane diamine, isophorone diamine, propane-2,2-cyclohexyl amine, and the like. Nonlimiting examples of suitable aromatic diamines include phenylene diamines and toluene diamines, for example o-phenylene diamine and p-tolylene diamine. These and other suitable polyamines are described in detail in U.S. Patent No. 4,046,729 at column 6, line 61 to column 7, line 26, which is incorporated herein by reference.

Appropriate mixtures of curing agents may also be used in the weldable primer. The weight percent of the curing agent present in the weldable primer generally ranges from 5 to 60 percent based on the total weight of resin solids present in the resinous binder.

The resinous binder of the weldable primer composition may further comprise a catalyst to accelerate the crosslinking reaction or to promote the crosslinking reaction at a lower temperature. Selection of suitable catalysts is dependent upon the particular functional groups present and are well known to those skilled in the art. Nonlimiting examples of suitable catalysts for aminoplast reactions include acidic materials, for example, acid phosphates, such as phenyl acid phosphate, and substituted or unsubstituted sulfonic acids such as dodecylbenzene sulfonic acid and para-toluene sulfonic acid. Nonlimiting examples of suitable catalysts for reactions between isocyanate groups and active hydrogen-containing materials, for example, those comprising hydroxyl groups, include tin catalysts such as dibutyl tin dilaurate, dibutyl tin diacetate, and dibutyl tin oxide. Nonlimiting examples of epoxy acid base catalysts include tertiary amines such as N,N'-dimethyldodecyl amine catalysts.

The catalyst can also be a phosphatized polyester or a phosphatized epoxy. For example, the catalyst can be the reaction product of phosphoric acid and a bisphenol A diglycidyl ether having two hydrogenated phenolic rings, such as DRH-151, which is commercially available from Shell Chemical Co. When added to the other components that form the weldable primer, the catalyst can be present in an amount ranging from 0.1 to 5.0 percent by weight, and is typically present in an amount ranging from 0.5 to 1.5 percent by weight based on the total weight of resin solids present in the weldable primer.

As stated above, the weldable primer further comprises (B) at least one electroconductive pigment to render the composition electrically conductive and spot-weldable. Suitable electroconductive pigments include electrically conductive carbon black pigments. Generally, the carbon blacks can be any one or a blend of carbon blacks ranging from those that are known as higher conductive carbon blacks, i.e. those with a BET surface area greater than 500 m²/gram and DBP adsorption number (determined in accordance with ASTM D2414-93) of 200 to 600 ml/100 grams to those with lower DBP numbers on the order of 30 to 120 ml/100 gram such as those with DBP numbers of 40 to 80 ml/100 grams.

Examples of commercially available electroconductive carbon black pigments include Cabot Monarch™ 1300, Cabot XC-72R, Black Pearls 2000 and Vulcan XC 72 sold by Cabot Corporation; Acheson Electrodag™ 230 sold by Acheson Colloids Co.; Columbian Raven™ 3500 sold by Columbian Carbon Co.; and Printex™ XE 2, Printex 200, Printex L and Printex L6 sold by DeGussa Corporation, Pigments Group. Suitable carbon blacks are also described in U.S. Patent No. 5,733,962.

Also, electrically conductive silica pigments may be used. Suitable examples include AEROSIL 200 sold by Japan Aerosil Co., Ltd., and SYLOID® 161, SYLOID® 244, SYLOID® 308, SYLOID® 404 and SYLOID® 978, all available from Fuji Davison Co., Ltd.

Other electrically conductive pigments can be used. For example, metal powders such as aluminum, copper or special steel, molybdenum disulphide, iron oxide, e.g., black iron oxide, antimony-doped titanium dioxide and nickel doped titanium dioxide can be used.

Particles coated with metals such as cobalt, copper, nickel, iron, tin, zinc, and combinations of thereof are also useful. Particles which can be coated with the aforementioned metals include alumina, aluminum, aromatic polyester, boron nitride, chromium, graphite, iron, molybdenum, neodymium/iron/boron, samarium cobalt, silicon carbide, stainless steel, titanium diboride, tungsten, tungsten carbide, and zirconia particles.

The aforementioned metal-coated particles are commercially available from Advanced Ceramics Corp.

Other metal-coated particles which may be used advantageously in the weldable primer include ceramic microballoons, chopped glass fibers, graphite powder and flake, boron nitride, mica flake, copper powder and flake, nickel powder and flake, aluminum coated with metals such as carbon, copper, nickel, palladium, silicon, silver and titanium coatings. These particles are typically metal-coated using fluidized bed chemical vacuum deposition techniques. Such metal-coated particles are commercially available from Powdermet, Inc. Mixtures of different electroconductive pigments can be used.

The electroconductive pigment also can be selected from at least one of ferrophosphorous, zinc, tungsten and mixtures thereof. The electroconductive pigment typically is dispersed in the resinous binder such that the weight ratio of electroconductive pigment to resinous binder is within the range of 1.0 to 6.0:1. Zinc and ferrophosphorous can also be used either alone or in combination as the electroconductive pigment.

When tungsten is used as the electroconductive pigment, the tungsten is dispersed in the resinous binder such that the weight ratio of electroconductive pigment to resinous binder is within the range of 0.1 to 4.0:1, typically within the range of 0.75 to 1.25:1. Higher levels of tungsten can be used if desired.

Suitable zinc pigments are commercially available from ZINCOLI GmbH as trademark ZINCOLIS® 620 or 520. Suitable iron phosphide pigments, also referred to as ferrophosphorus, are commercially available from Occidental Chemical Corporation under the tradename FERROPHOS™.

The electroconductive pigment is dispersed in the resinous binder in an amount such that when the weldable primer is deposited and cured on a metallic substrate, the weldable primer is sufficiently electroconductive to sustain a spot welding and joining operation as used in an automotive assembly plant. Typically, the weight ratio of the electroconductive pigment to the resinous binder is within the range of 0.2 to 10, and often within the range of 1.0 to 6.0:1.

The weldable primer may further comprise one or more corrosion inhibitive materials, for example, corrosion resistant pigments. Suitable corrosion resistant pigments include, but are not limited to, zinc phosphate, calcium ion-exchanged silica, colloidal silica, synthetic amorphous silica, and molybdates such as calcium molybdate, zinc molybdate, barium molybdate, strontium molybdate, and mixtures thereof. Suitable calcium ion-exchanged silica is commercially available from W.R. Grace & Co. as SHIELDEX® AC3. Suitable colloidal silica is available from Nissan Chemical Industries, Ltd. under the tradename SNOWTEX® . Suitable amorphous silica is available from W.R. Grace & Co. under the tradename SYLOID® .

The weldable primer can further comprise other optional ingredients such as inorganic lubricants, for example, molybdenum disulfide particles which are commercially available from Climax Molybdenum Marketing Corporation. The weldable primer can also include extender pigments such as iron oxides and iron phosphides, flow control agents, and thixotropic agents such as silica, montmorillonite clay, and hydrogenated castor oil. Further, the weldable primer can include anti-settling agents such as aluminum stearate and polyethylene powder, dehydrating agents which inhibit gas formation, such as silica, lime or sodium aluminum silicate, and wetting agents including salts of sulfated castor oil derivatives such as those commercially available from Cognis Corporation under the trademark RILANIT® R4.

Generally, the weldable primer is essentially free of chromium-containing materials, i.e., contains less than 2 weight percent of chromium-containing materials (expressed as CrO₃), often less than 0.05 weight percent, and typically about 0.00001 weight percent based on the weight of total solids present in the composition. Examples of such chromium-containing materials include chromic acid, chromium trioxide, chromic acid anhydride, dichromate salts such as ammonium dichromate, sodium dichromate, potassium dichromate, and calcium chromate.

The weldable primer may contain a diluent to adjust the viscosity of the coating composition. Useful diluents include water, organic solvents, or mixtures of water and organic solvents. If a diluent is used, it should not detrimentally affect the adhesion of the curable coating composition to the metal substrate.

When water is used as the diluent ("aqueous weldable primer"), it may be necessary to include additives such as dispersants, thickeners, stabilizers, rheology modifiers, and anti-settling agents in the weldable primer. A suitable rheology modifier is RM-8 which is commercially available from Rohm and Haas Company. A suitable dispersing agent and/or stabilizer is potassium tripolyphosphate (KTPP).

Typically, an aqueous weldable primer has a viscosity ranging from 100 to 2000 centipoise as determined using a Brookfield Cone and Plate viscometer. Depending on the application method which will be used to apply the weldable primer, it may be necessary to further reduce the viscosity of the weldable primer by adding more water and/or organic solvent.

Aqueous weldable primer compositions can also contain an amine. For example, hydroxyl group-containing amines such as dimethanolamne and diisopropanolamine are suitable. The volatile organic compound (VOC) content of the aqueous composition can be less than 2; typically, it is less than 1.7.

Optionally, the aqueous weldable primers can comprise one or more surfactants to improve the ability of the coating to wet the substrate (i.e., to form a continuous coating thereover). Generally, surfactants are present in an amount of less than 2 weight percent based on total weight of the coating composition. Suitable surfactants are commercially available from Air Products and Chemicals, Inc. under the tradename SURFYNOL® .

The diluent can be an organic solvent ("organic solvent-based weldable primer"). For example, alcohols having up to about 8 carbon atoms, such as ethanol and isopropanol; alkyl ethers of glycols, such as 1-methoxy-2-propanol, and monoalkyl ethers of ethylene glycol, diethylene glycol and propylene glycol are suitable diluents. A propylene glycol monomethyl ether or a dipropylene glycol monomethyl ether such as those commercially available from Dow Chemical Company as DOWANOL® PM and DOWANOL® DPM, respectively, are well known diluents.

Organic solvent-based weldable primers generally have a viscosity ranging from 100 to 2000 centipoise as determined using a Brookfield Cone and Plate viscometer. If necessary, the viscosity of the weldable primer may be further reduced using a suitable organic diluent.

The organic solvent-based weldable primer can further include an amine for stability purposes. For example, alkyl substituted morpholine compounds such as N-methyl and N-ethyl morpholine are suitable.

Other suitable organic solvents include ketones such as cyclohexanone, acetone, methyl ethyl ketone, methyl isobutyl ketone and isophorone; esters and ethers such as 2-ethoxyethyl acetate, propylene glycol methyl ether acetates such as DOWANOL® PM ACETATE which is commercially available from Dow Chemical Company; and aromatic solvents such as toluene, xylene, aromatic solvent blends derived from petroleum such as those available under the trademark SOLVESSO® .

Exemplary of a suitable commercially available weldable primer is BONAZINC® , a zinc rich, mill applied, organic, film-forming composition which is commercially available from PPG Industries, Inc.

When in aqueous form, the weldable primer composition pH generally ranges from 7.0 to 12.0, and typically from 8.0 to 10.5. If necessary, water-soluble or water-dispersible acids and/or bases can be used to adjust the pH. Suitable acids include inorganic acids, such as hydrofluoric acid, fluoroboric acid, phosphoric acid, and nitric acid; organic acids, such as lactic acid, acetic acid, hydroxyacetic acid, citric acid; and mixtures thereof. Suitable bases include inorganic bases, such as sodium hydroxide and potassium hydroxide; nitrogen-containing compounds such as ammonia, triethylamine, methyl ethanol amine, diisopropanolamine; and mixtures thereof.

The weldable primer composition can be applied to the surface of an untreated or treated and/or coated metallic substrate by any conventional application technique known in the art, such as by spraying, immersion, or roll coating in a batch or continuous process. Squeegee or wringer rolls can be used to remove excess weldable primer composition. After the weldable primer composition is applied onto a metallic substrate, it typically is thermally cured.

As used herein, by "cured" is meant that any crosslinkable components of the weldable primer are at least partially crosslinked. The crosslink density of the crosslinkable components, i.e., the degree of crosslinking, ranges from 5 percent to 100 percent of complete crosslinking. The crosslink density can be determined by a variety of methods including mechanical thermal analysis (DMTA) techniques.

Curing can be achieved at peak metal temperatures ranging from 100°C to 400°C. Peak metal temperatures ranging from 130°C to 260°C are typical. Suitable cure times (i.e., oven dwell times) can vary widely, and can range from twenty (20) seconds to sixty (60) seconds.

The dry film thickness of the weldable primer layer generally depends on the application conditions. In order to provide sufficient corrosion resistance for a metallic substrate which will be used as an automotive part, the dry film thickness of the weldable primer layer must be at least 1 micrometer (about 0.04 mils), often 1 to 20 micrometers, and typically 2 to 10 micrometers. Depending on the specific chemical makeup of the substrate and the end use of the substrate, it may be necessary to increase or decrease the dry film thickness of the weldable primer layer.

The following Examples are illustrative of the present invention and are not intended to limit the scope of the present invention.

### EXAMPLES

The present invention will be further illustrated by the nonlimiting examples below. Table 1 contains compositional data for Examples 1-13 which exemplify various embodiments of the composition having sealing and sound dampening properties according to the present invention. Table 2 contains the results of the Ford Corrosion Test for substrates containing the compositions of Examples 1-11 when the exemplary composition was underbaked ("underbake case"). Table 3 contains the results of the Ford Corrosion Test for substrates containing the compositions of Examples 1-11 when the exemplary composition was overbaked ("overbake case"). Table 4 contains the results of substrates containing the compositions of Examples 12-14 when subjected to the Chrysler Corrosion Test. Examples 12-14 demonstrate the corrosion resistance of the substrates when the inventive composition is applied over a layer of weldable primer. Examples 12-14 were applied over a galvanized panel and over a galvanized panel coated with a layer of weldable primer. Table 5 shows the "under" and "over" bake schedules for different embodiments of the present invention. Table 6 reflects the sound dampening performance of selected exemplary compositions by recording Oberst dissipation data.

In the examples below, Example 2 is a comparative example. Example 2 is sealant/sound dampener which is commercially available from PPG Industries, Inc. under the trade name P7912.

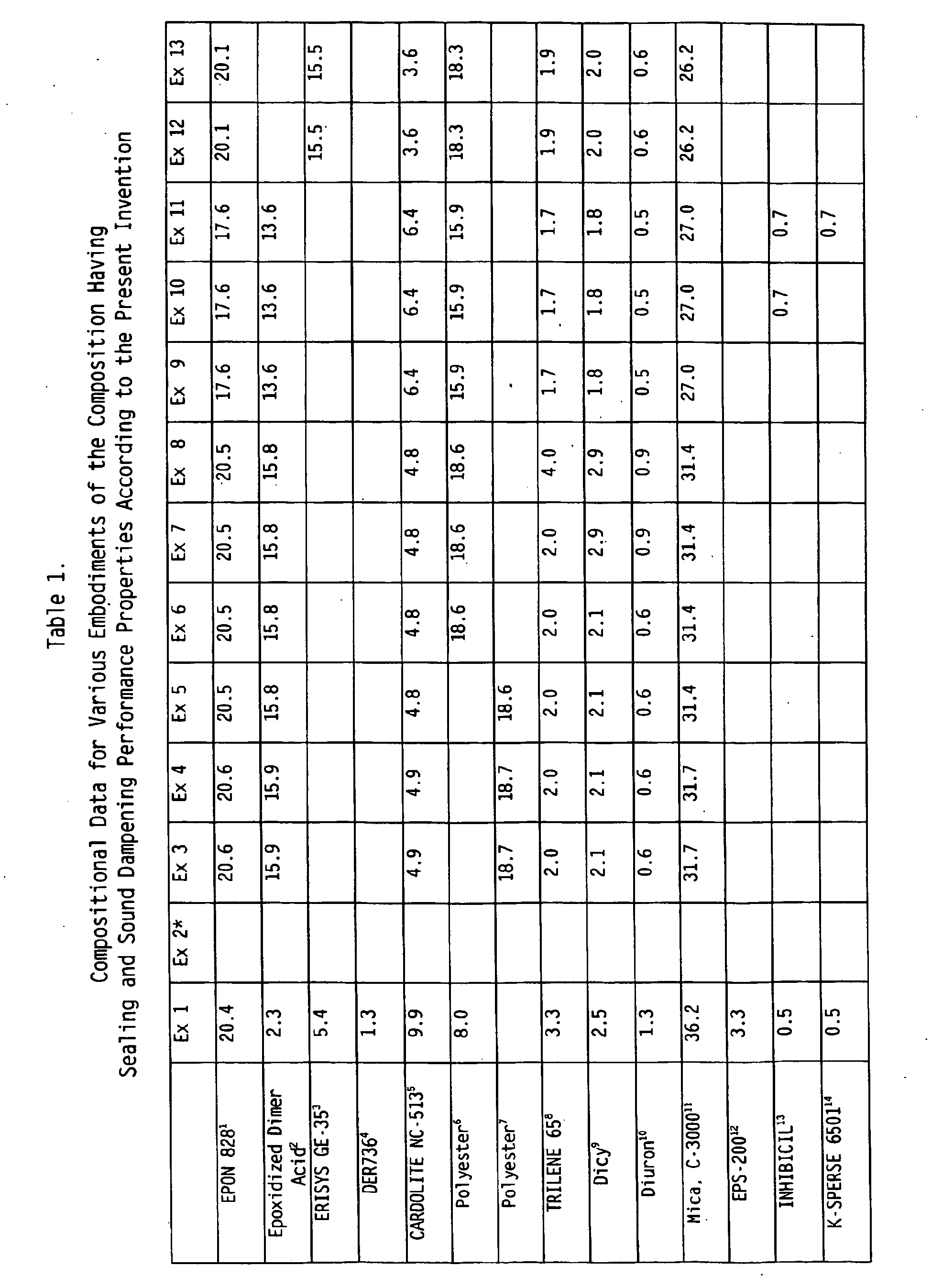

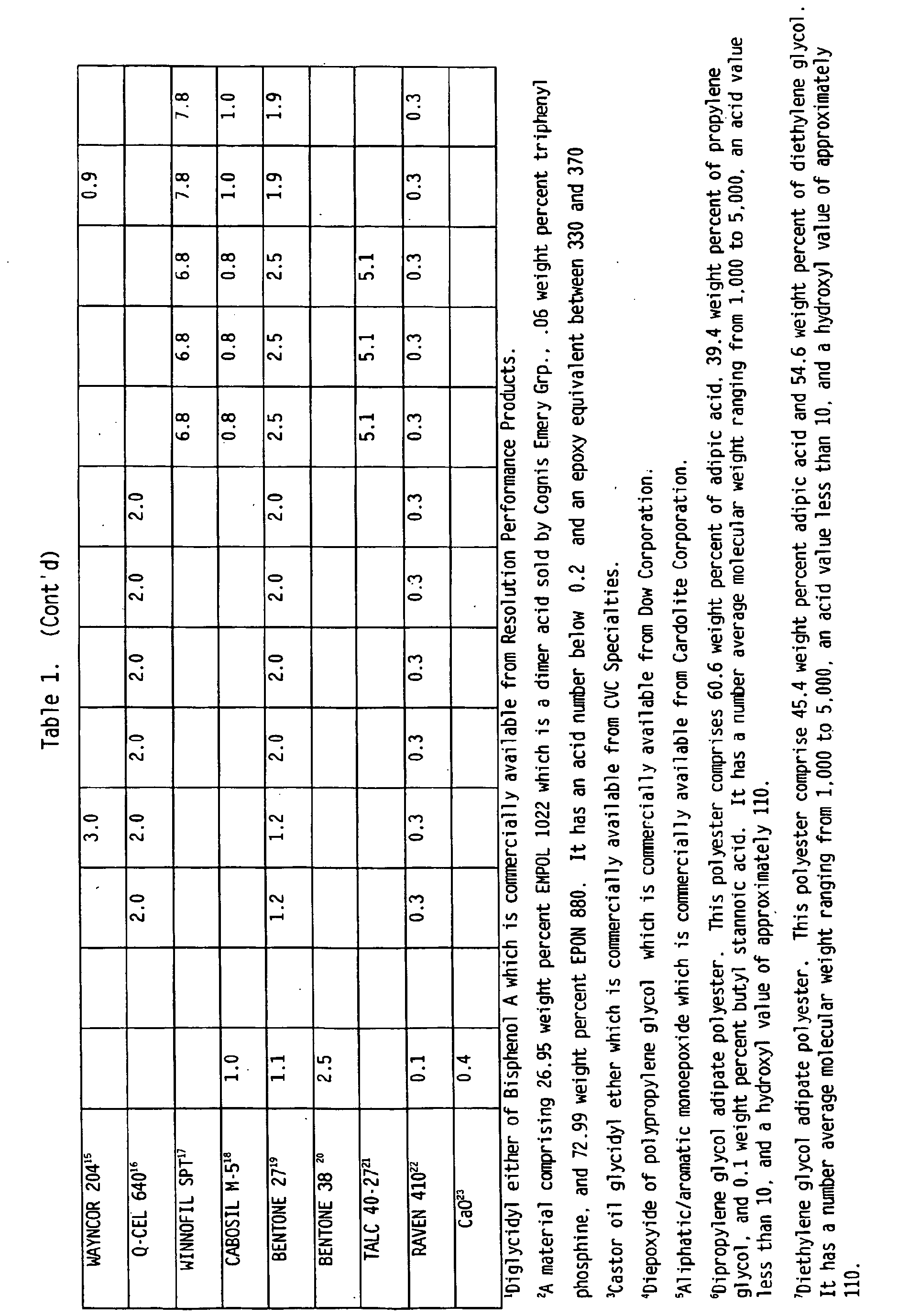

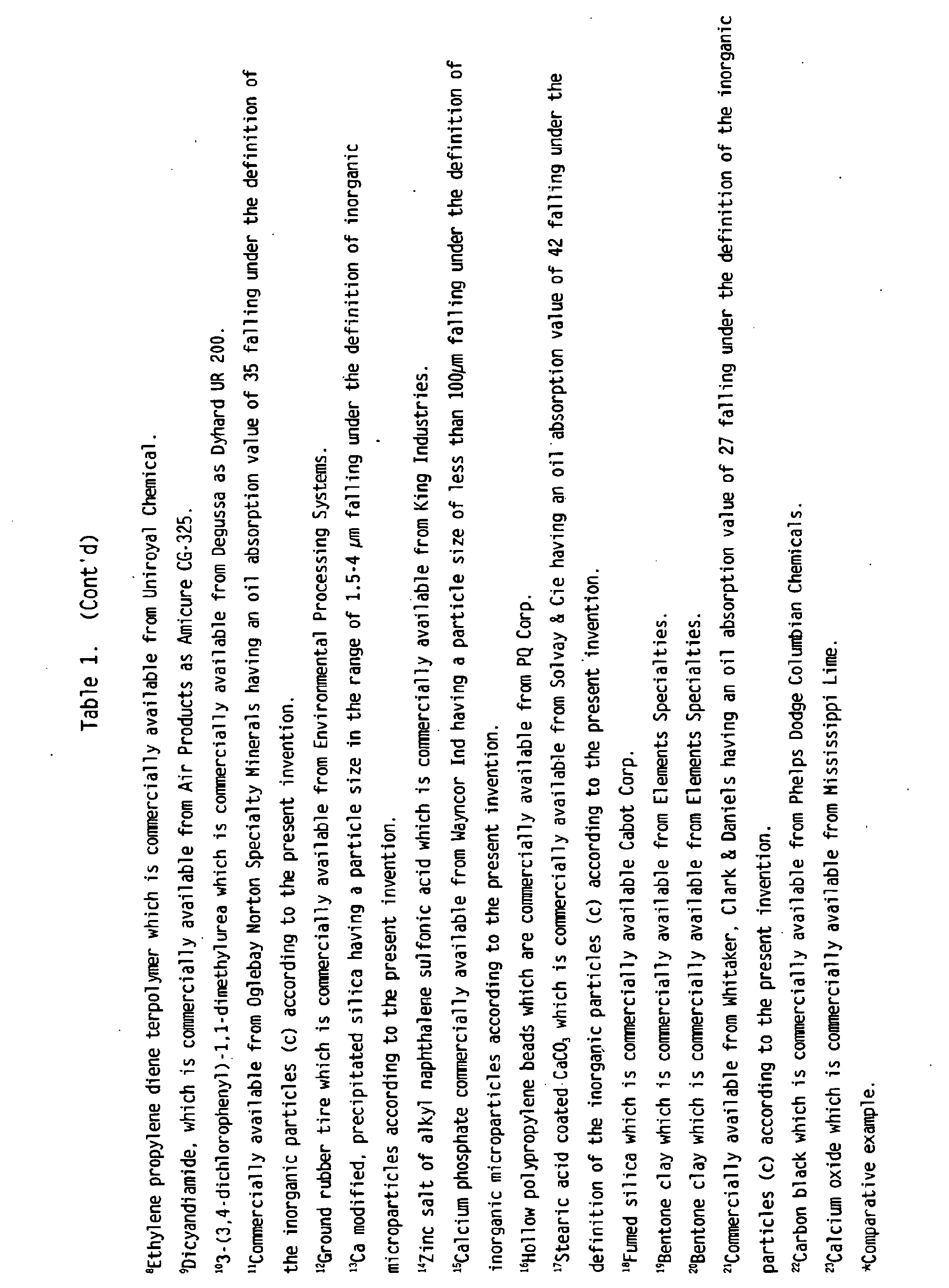

Tables 2 and 3 show the results of substrates containing various embodiments of the inventive composition when subjected to the Ford Corrosion Test¹. Table 2 shows the underbake case, and Table 3 shows the overbake case. See Table 5 for the "under" and "over" bake schedules.

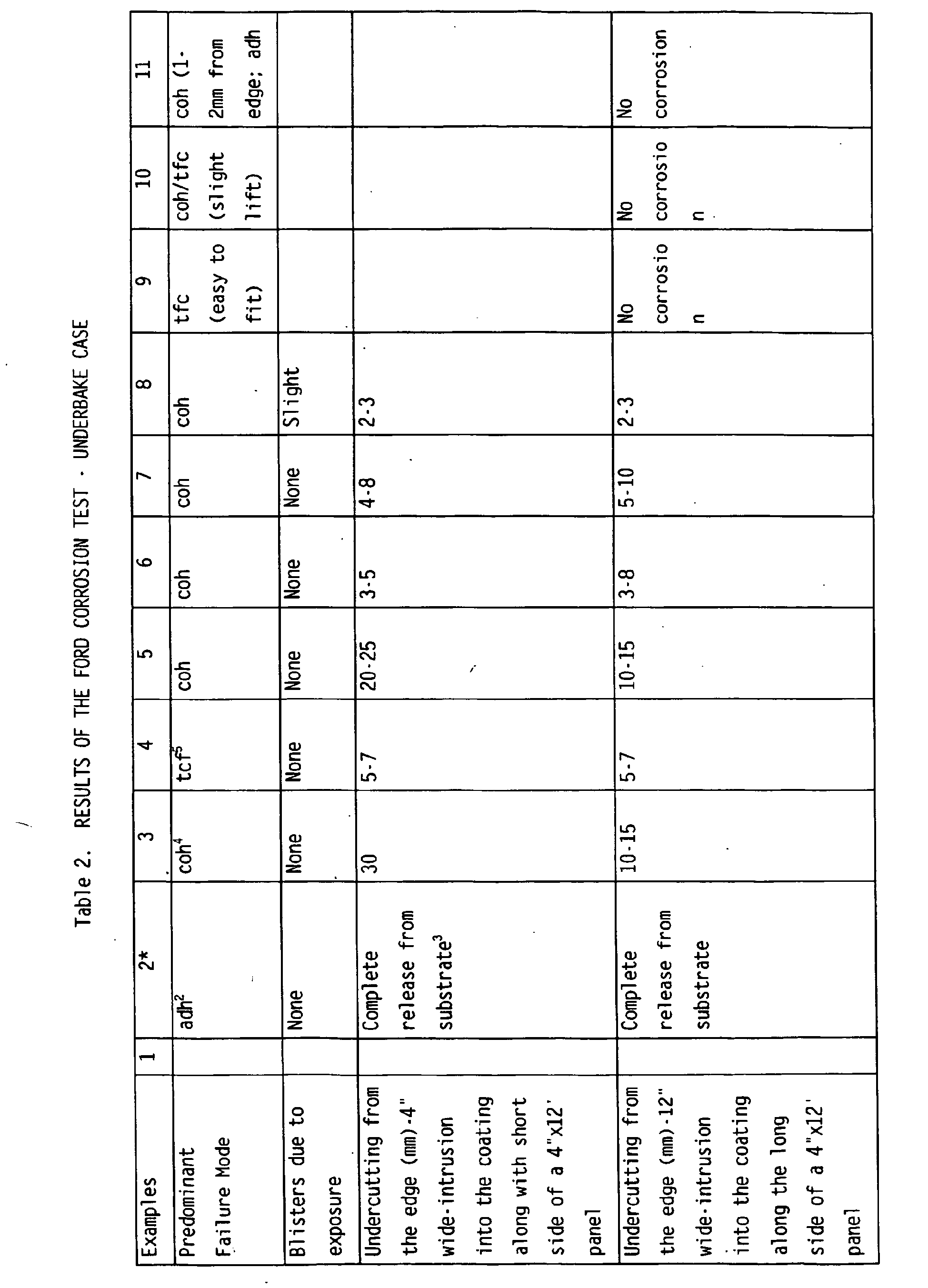

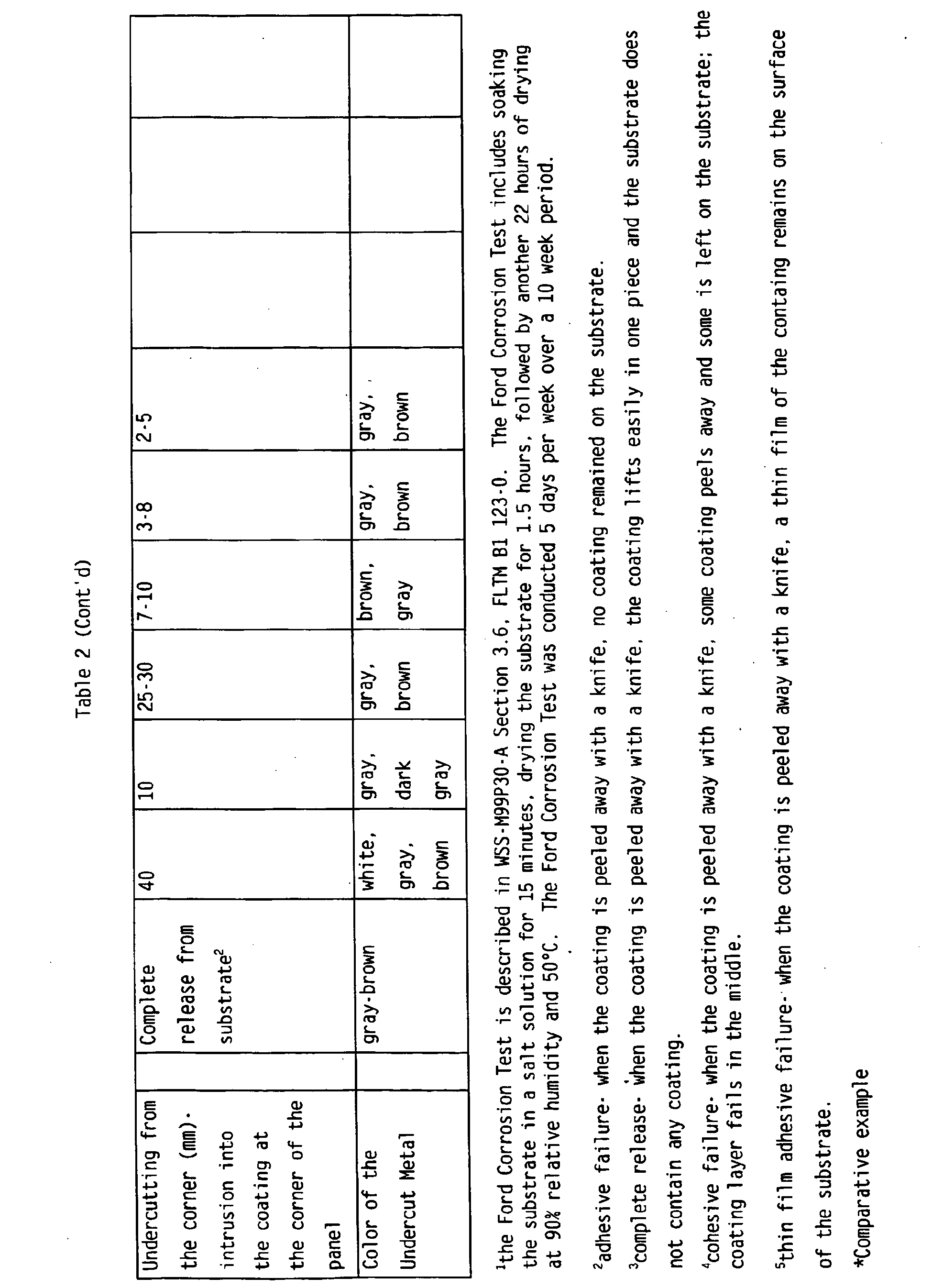

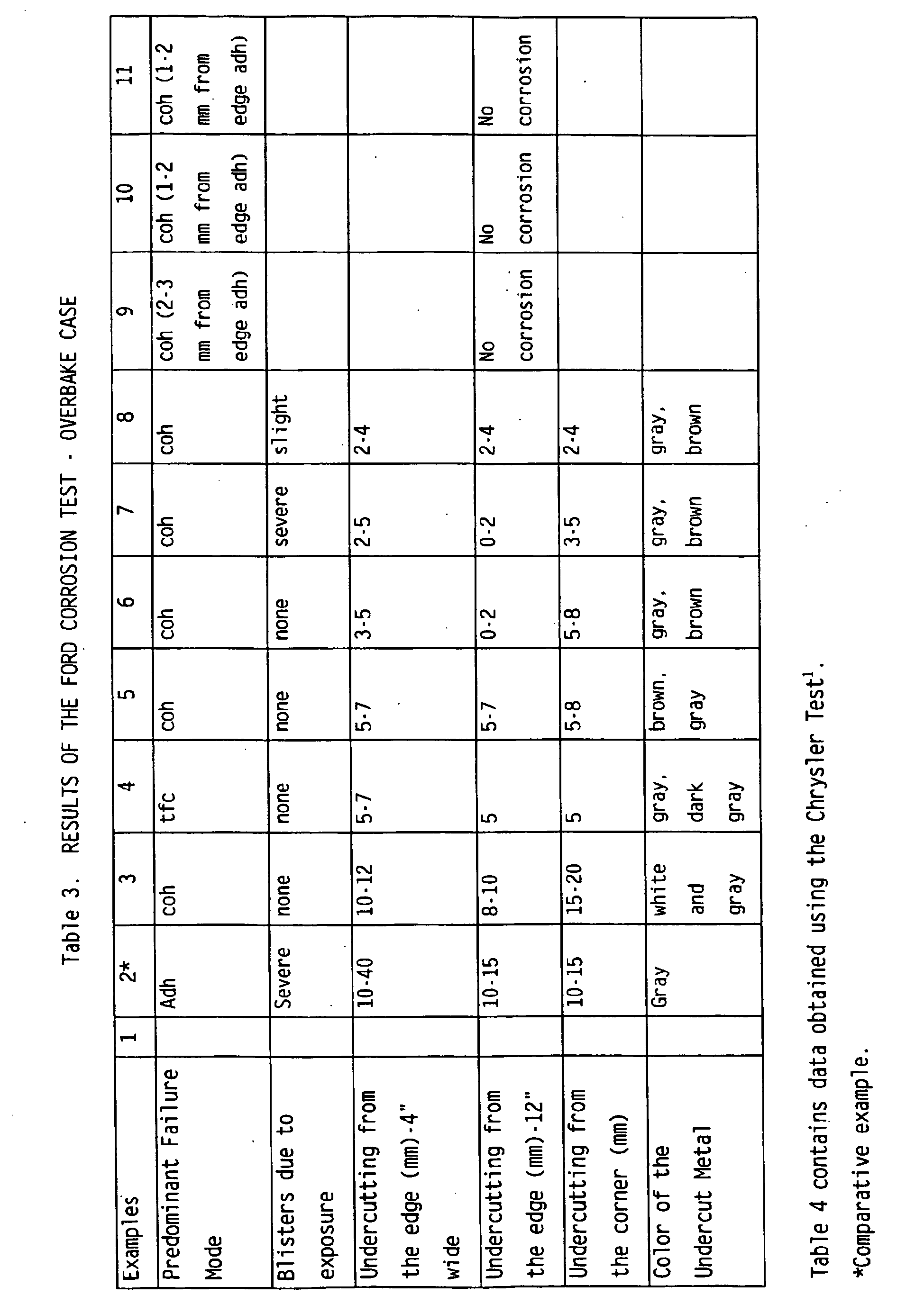

**Table 4. RESULTS OF THE CHRYSLER CORROSION TEST¹**

| Examples | 12 | 13 | 2* |
|---|---|---|---|
| COATING APPLIED OVER A GALVANIZED METAL PANEL | | | |
| *Corrosion* | none | none | none |
| Undercutting (mm) | 3-4 | 3-4 | almost total |
| COATING APPLIED OVER A GALVANIZED PANEL COATED WITH A WELDABLE PRIMER (BONAZINC) WHICH IS COMMERCIALLY AVAILABLE FROM PPG | | | |
| Corrosion | none | none | none |
| Undercutting (mm) | none | none | none |

| | | | |
|---|---|---|---|
| ¹The Chrysler Test is defined as Test method LP-463PB-10-01. | | | |
| *Comparative example. | | | |

**Table 5. UNDERBAKE AND OVERBAKE SCHEDULES FOR THE EXEMPLARY COMPOSITIONS**

| Example | Underbake Schedule | Overbake Schedule |
|---|---|---|
| 1 | 60 minutes at 335°F followed by 20 minutes at 330°F | 60 minutes at 375°F followed by 30 minutes at 250°F |
| 2* | 60 minutes at 335°F followed by 20 minutes at 330°F | 60 minutes at 375°F followed by 30 minutes at 250°F |
| 4 | 30 minutes at 325°F | 60 minutes at 400°F |
| 5 | 30 minutes at 325°F | 60 minutes at 400°F |
| 8 | 30 minutes at 325°F | 60 minutes at 380°F |
| 11 | 30 minutes at 325°F | 60 minutes at 380°F |
| 12 | 30 minutes at 325°F | 60 minutes at 380°F |
| 13 | 30 minutes at 325°F | 60 minutes at 380°F |

| | | |
|---|---|---|
| *Comparative example. | | |

**Table 6. Oberst Dissipation Data¹for Selected Examples**

| Example | Oberst Dissipation Factor Underbake Case | Oberst Dissipation Factor Overbake Case |
|---|---|---|
| 1 | 0.09 | 0.09 |
| 2* | 0.13 | 0.10 |
| 4 | 0.15 | 0.10 |
| 5 | 0.13 | 0.08 |
| 8 | 0.14 | 0.07 |
| 11 | 0.11 | 0.04 |
| 12 | 0.11 | 0.07 |
| 13 | 0.11 | 0.09 |

| | | |
|---|---|---|
| ¹The Oberst dissipation factor was measured at 200 Hz and 25°C in accordance with ASTM E-756-98. | | |
| *Comparative example. | | |

As can be seen from the experimental results above, the compositions of the present invention provide superior sealing and sound dampening properties. When the composition of the present invention was applied over a metallic substrate coated with a weldable primer, there was little or no corrosion and no undercutting. Depending on the desired end-use of the automotive part or other substrate onto which the inventive composition is applied, the specific formulation of the inventive composition can vary.

Whereas particular embodiments of this invention have been described above for purposes of illustration, it will be evident to those skilled in the art the numerous variations of the details of the present invention may be made without departing from the invention as defined in the appended claims.

## Claims

1. A composition having improved sealing and sound dampening properties comprising:
(a) one or more polyepoxides comprising at least two epoxide groups per molecule;
(b) a thermoplastic polyester polymer;
(c) a curing agent adapted to react with the polyepoxides;
(d) inorganic particles having an oil absorption value of less than 70 as determined in accordance with ASTM D281-95; and
(e) inorganic microparticles different from the inorganic particles (d), the inorganic microparticles having an average particle size prior to incorporation into the composition ranging from 0.5 to 200 microns, wherein the inorganic microparticles are selected from colloidal silica, calcium modified precipitated silica, ion exchanged silica gel, colloidal alumina, colloidal zirconia, and mixtures thereof.

2. The composition according to claim 1, wherein the polyepoxides comprise epoxy polyethers.

3. The composition according to claim 1, wherein the polyepoxides comprise polyglycidyl ethers of polyhydric alcohols.

4. The composition according to claim 1, wherein the polyepoxides are polyglycidyl esters of polycarboxylic acids.

5. The composition according to claim 1, wherein the polyepoxides are derived by epoxidating olefinically unsaturated alicyclic compounds.

6. The composition according to claim 1, wherein the polyepoxides contain oxyalkylene groups in the epoxy molecule.

7. The composition according to claim 1, wherein the polyepoxides comprise epoxy novolac resins.

8. The composition according to any of the preceding claims, wherein the polyepoxide is present in an amount ranging from 15 to 50 weight percent based on the total weight of the composition.

9. The composition according to any of the preceding claims, wherein the thermoplastic polyester polymer is substantially free of aromatic units.

10. The composition according to any of the preceding claims, wherein the thermoplastic polyester polymer is present in an amount ranging from 3 to 30 weight percent based on the total weight of the composition.

11. The composition according to any of the preceding claims, wherein said curing agent is an aliphatic, cycloaliphatic, or aromatic polyfunctional amine.

12. The composition according to any of the preceding claims, wherein said curing agent is present in the composition in an amount ranging from 1 to 50 weight percent based on the total weight of the composition.

13. The composition according to any of the preceding claims, wherein the inorganic particles are selected from particles having a spherical morphology, irregular morphology, or platy morphology, needle shaped, and mixtures thereof.

14. The composition according to any of the preceding claims, wherein the inorganic particles have a particle size prior to incorporation into the composition ranging from 5 to 200 microns.

15. The composition according to any of the preceding claims, wherein the inorganic particles comprise mica, calcium carbonate, dolomite, talc, and/or calcium metasilicate.

16. The composition according to any of the preceding claims, wherein the inorganic particles are present in an amount ranging from 5 to 65 weight percent based on the total weight of the composition.

17. The composition according to any of the preceding claims that is capable of being spray applied.

18. The composition according to any of the preceding claims further comprising one or more alkylene diene copolymers.

19. The composition according to any of the preceding claims, wherein the inorganic microparticles are present in an amount sufficient to provide corrosion resistance properties as measured in accordance with Chrysler Test Method LP-463PB-10-01 which are superior to the corrosion resistance properties of the same composition which does not contain said inorganic microparticles.

20. The composition in accordance with claim 19, wherein the inorganic microparticles are present in the composition in an amount ranging from 0.1 to 5 weight percent based on the total weight of the composition.

21. The composition according to any of the preceding claims, wherein the inorganic microparticles have a particle size prior to incorporation into the composition ranging from 3 to 150 microns.

22. The composition according to any of the preceding claims further comprising one or more metallic compounds comprising a cation selected from zinc, aluminum, magnesium, calcium, strontium, titanium, zirconium, cesium, yttrium, and iron cations; and an anion selected from phosphate, polyphosphate, phosphite, molybdate, sulfonate, tungstate, borate, borosilicate, silicate, and cyanamide.

23. A multilayer composite comprising a weldable primer layer formed from a weldable primer composition, and a second layer having improved sealing and sound dampening properties formed from a second composition according to any of claims 1-22 over at least a portion of the weldable primer layer.

24. The multilayer composite according to claim 23, wherein the weldable primer layer is formed from a weldable primer composition comprising:
(A) a resinous binder comprising:
(1) at least one functional group-containing polymer, and
(2) at least one curing agent having functional groups reactive with the functional groups of (1); and
(B) at least one electroconductive pigment dispersed in resinous binder (A).

25. A coated metallic substrate comprising:
a metallic substrate, and a composition according to any of claims 1-22 having sealing and sound dampening properties over at least a portion of the substrate.

26. A coated metallic substrate comprising:
a metallic substrate;
a weldable primer layer formed from a weldable primer composition deposited over at least a portion of the substrate; and
a second layer formed from a second composition having sealing and
sound dampening properties according to any of claims 1-22 deposited over at least a portion of the weldable primer layer.

27. The coated metallic substrate according to claim 26, wherein the first weldable primer layer is formed from a weldable primer composition comprising:
(A) a resinous binder comprising:
(1) at least one functional group-containing polymer, and
(2) at least one curing agent having functional groups reactive with the functional groups of (1); and
(B) at least one electroconductive pigment dispersed in resinous binder (A).

28. The coated metallic substrate of any of claims 25-27, wherein the metallic substrate is selected from the group comprising ferrous metal, non-ferrous metal, and combinations thereof.

29. A method for forming a coating having sealing and sound dampening properties on a metallic substrate comprising the steps of:
(a) providing a metallic substrate having two major surfaces;
(b) applying a composition according to any of claims 1-19 to at least a portion of one of the major surfaces of the substrate;
(c) curing the applied composition,
wherein the coated substrate of step (c) has a sound dampening value greater than 0.030 Oberst dissipation factor as measured at 200 Hz at 25°C in accordance with ASTM E-756-98.

30. The method according to claim 29, wherein the cured composition has a dry film thickness ranging from 10 to 300 mils (250 to 7,500 micrometers).

31. The method according to claim 29, wherein the substrate of step (c) is heated to a temperature ranging from 90°C to 180°C.

## Patentansprüche

1. Zusammensetzung mit verbesserten Dichtungs- und Schalldämpfungseigenschaften, enthaltend:
(a) ein oder mehrere Polyepoxid(e), die wenigstens zwei Epoxygruppen pro Molekül enthalten,
(b) ein thermoplastisches Polyesterpolymer;
(c) ein Härtungsmittel, das angepasst ist, um mit den Polyepoxiden zu reagieren,
(d) anorganische Teilchen mit einem Ölabsorptionswert von weniger als 70, bestimmt gemäß ASTM D281-95, und
(e) anorganische Mikroteilchen, die sich von den anorganischen Teilchen (d) unterscheiden, wobei die anorganischen Mikroteilchen vor dem Einbringen in die Zusammensetzung eine mittlere Teilchengröße im Bereich von 0,5 bis 200 µm aufweisen und die anorganischen Mikroteilchen ausgewählt sind aus kolloidaler Kieselsäure, calciummodifizierter Fällungskieselsäure, ionenausgetauschtem Silicagel, kolloidalem Aluminiumoxid, kolloidalem Zirconiumdioxid und Mischungen davon.

2. Zusammensetzung nach Anspruch 1, wobei die Polyepoxide Epoxypolyether enthalten.

3. Zusammensetzung nach Anspruch 1, wobei die Polyepoxide Polyglycidylether von Polyhydroxyalkoholen enthalten.

4. Zusammensetzung nach Anspruch 1, wobei die Polyepoxide Polyglycidylester von Polycarbonsäuren sind.

5. Zusammensetzung nach Anspruch 1, wobei die Polyepoxide aus der Epoxidierung von olefinisch ungesättigten alicyclischen Verbindungen stammen.

6. Zusammensetzung nach Anspruch 1, wobei die Polyepoxide Oxyalkylengruppen in dem Epoxymolekül enthalten.

7. Zusammensetzung nach Anspruch 1, wobei die Polyepoxide Epoxy-Novolak-Harze enthalten.

8. Zusammensetzung nach einem der vorstehenden Ansprüche, wobei das Polyepoxid in einer Menge im Bereich von 15 bis 50 Gew.-%, bezogen auf das Gesamtgewicht der Zusammensetzung, vorhanden ist.

9. Zusammensetzung nach einem der vorstehenden Ansprüche, wobei das thermoplastische Polyesterpolymer im Wesentlichen frei von aromatischen Einheiten ist.

10. Zusammensetzung nach einem der vorstehenden Ansprüche, wobei das thermoplastische Polyesterpolymer in einer Menge im Bereich von 3 bis 30 Gew.-%, bezogen auf das Gesamtgewicht der Zusammensetzung, vorhanden ist.

11. Zusammensetzung nach einem der vorstehenden Ansprüche, wobei dieses Härtungsmittel ein aliphatisches, cycloaliphatisches oder aromatisches polyfunktionelles Amin ist.

12. Zusammensetzung nach einem der vorstehenden Ansprüche, wobei dieses Härtungsmittel in der Zusammensetzung in einer Menge im Bereich von 1 bis 50 Gew.-%, bezogen auf das Gesamtgewicht der Zusammensetzung, vorhanden ist.

13. Zusammensetzung nach einem der vorstehenden Ansprüche, wobei die anorganischen Teilchen ausgewählt sind aus Teilchen mit einer sphärischen Morphologie, einer irregulären Morphologie oder einer plättchenförmigen Morphologie, nadelförmig und Mischungen davon.

14. Zusammensetzung nach einem der vorstehenden Ansprüche, wobei die anorganischen Teilchen vor dem Einbringen in die Zusammensetzung eine Teilchengröße im Bereich von 5 bis 200 µm aufweisen.

15. Zusammensetzung nach einem der vorstehenden Ansprüche, wobei die anorganischen Teilchen Glimmer, Calciumcarbonat, Dolomit, Talk und/oder Calciummetasilicat enthalten.

16. Zusammensetzung nach einem der vorstehenden Ansprüche, wobei die anorganischen Teilchen in einer Menge im Bereich von 5 bis 65 Gew.-%, bezogen auf das Gesamtgewicht der Zusammensetzung, vorhanden sind.

17. Zusammensetzung nach einem der vorstehenden Ansprüche, die dazu geeignet ist, durch Sprühen aufgebracht zu werden.

18. Zusammensetzung nach einem der vorstehenden Ansprüche, die zusätzlich ein oder mehrere Alkylen-Dien-Copolymer(e) enthält.

19. Zusammensetzung nach einem der vorstehenden Ansprüche, wobei die anorganischen Mikroteilchen in einer Menge vorhanden sind, die ausreicht, um Korrosionsbeständigkeitseigenschaften, gemessen entsprechend der Chrysler-Test-Methode LP-463PB-10-01, bereitzustellen, die den Korrosionsbeständigkeitseigenschaften der gleichen Zusammensetzung, die diese anorganischen Mikroteilchen nicht enthält, überlegen sind.

20. Zusammensetzung nach Anspruch 19, wobei die anorganischen Mikroteilchen in der Zusammensetzung in einer Menge im Bereich von 0,1 bis 5 Gew.-%, bezogen auf das Gesamtgewicht der Zusammensetzung, vorhanden sind.

21. Zusammensetzung nach einem der vorstehenden Ansprüche, wobei die anorganischen Mikroteilchen vor dem Einbringen in die Zusammensetzung eine Teilchengröße im Bereich von 3 bis 150 µm aufweisen.

22. Zusammensetzung nach einem der vorstehenden Ansprüche, die zusätzlich eine oder mehrere metallische Verbindung(en) enthält, die ein Kation, ausgewählt aus Zink-, Aluminium-, Magnesium-, Calcium-, Strontium-, Titan-, Zirconium-, Cäsium-, Yttrium- und Eisenkationen, und ein Anion, ausgewählt aus Phosphat, Polyphosphat, Phosphit, Molybdat, Sulfonat, Wolframat, Borat, Borosilicat, Silicat und Cyanamid, enthält.

23. Ein mehrschichtiger Verbundstoff, enthaltend eine schweißbare Grundierungsschicht, die aus einer schweißbaren Grundierungszusammensetzung gebildet ist, und eine zweite Schicht mit verbesserten Dichtungs- und Schalldämpfungseigenschaften, die aus einer zweiten Zusammensetzung gemäß einem der Ansprüche 1-22 über wenigstens einem Teil der schweißbaren Grundierungsschicht gebildet ist.

24. Mehrschichtiger Verbundstoff nach Anspruch 23, wobei die schweißbare Grundierungsschicht aus einer schweißbaren Grundierungszusammensetzung gebildet ist, die
(A) ein harzartiges Bindemittel, enthaltend:
(1) wenigstens ein funktionelle Gruppen enthaltendes Polymer und
(2) wenigstens ein Härtungsmittel mit funktionellen Gruppen, die mit den funktionellen Gruppen von (1) reaktiv sind, und
(B) wenigstens ein elektrisch leitfähiges Pigment, das in dem harzartigen Bindemittel (A) dispergiert ist,
enthält.

25. Beschichtetes metallisches Substrat, aufweisend:
ein metallisches Substrat und eine Zusammensetzung nach einem der Ansprüche 1-22 mit Dichtungs- und Schalldämpfungseigenschaften über wenigstens einem Teil des Substrats

26. Beschichtetes metallisches Substrat, aufweisend:
ein metallisches Substrat,
eine schweißbare Grundierungsschicht, die aus einer schweißbaren Grundierungszusammensetzung gebildet ist, die über wenigstens einem Teil des Substrats abgeschieden ist, und
eine zweite Schicht, die aus einer zweiten Zusammensetzung mit Dichtungs- und Schalldämpfungseigenschaften nach einem der Ansprüche 1-22 gebildet ist, die über wenigstens einem Teil der schweißbaren Grundierungsschicht abgeschieden ist.

27. Beschichtetes metallisches Substrat nach Anspruch 26, wobei die erste schweißbare Grundierungsschicht aus einer schweißbaren Grundierungszusammensetzung gebildet ist, die
(A) ein harzartiges Bindemittel, enthaltend:
(1) wenigstens ein funktionelle Gruppen enthaltendes Polymer und
(2) wenigstens ein Härtungsmittel mit funktionellen Gruppen, die mit den funktionellen Gruppen von (1) reaktiv sind, und
(B) wenigstens ein elektrisch leitfähiges Pigment, das in dem harzartigen Bindemittel (A) dispergiert ist, enthält.

28. Beschichtetes metallisches Substrat nach einem der Ansprüche 25-27, wobei das metallische Substrat ausgewählt ist aus der Gruppe bestehend aus Eisenmetall, Nichteisenmetall und Kombinationen davon.

29. Verfahren zur Bildung einer Beschichtung mit dichtenden und schalldämpfenden Eigenschaften auf einem metallischen Substrat, umfassend die Schritte:
(a) Bereitstellen eines metallischen Substrats mit zwei Hauptoberflächen,
(b) Aufbringen einer Zusammensetzung nach einem der Ansprüche 1-19 auf wenigstens einen Teil einer der Hauptoberflächen des Substrats,
(c) Härten der aufgebrachten Zusammensetzung,
wobei das beschichtete Substrat aus Schritt (c) einen Schalldämpfungswert von mehr als 0,030 Oberst-Dissipationsfaktor, gemessen bei 200 Hz und 25°C entsprechend ASTM-E-756-98, aufweist.

30. Verfahren nach Anspruch 29, wobei die gehärtete Zusammensetzung eine Trockenfilmdichte im Bereich von 10 bis 300 Mil (250 bis 7.500 µm) aufweist.

31. Verfahren nach Anspruch 29, wobei das Substrat aus Schritt (c) auf eine Temperatur im Bereich von 90°C bis 180°C erwärmt wird.

## Revendications

1. Composition ayant des propriétés d'étanchéité et d'insonorisation améliorées comprenant :
(a) un ou plusieurs polyépoxydes comprenant au moins deux groupes époxyde par molécule;
(b) un polymère de polyester thermoplastique;
(c) un agent de durcissement adapté pour réagir avec les polyépoxydes;
(d) des particules inorganiques ayant un indice d'absorption d'huile de moins de 70 tel que déterminé suivant la méthode ASTM D281-95; et
(e) des microparticules inorganiques différentes des particules inorganiques (d), les microparticules inorganiques ayant une taille de particule moyenne avant incorporation dans la composition allant de 0,5 à 200 microns, dans laquelle les microparticules inorganiques sont choisies parmi la silice colloïdale, la silice précipitée modifiée au calcium, le gel de silice à échange d'ions, l'alumine colloïdale, la zircone colloïdale et leurs mélanges.

2. Composition suivant la revendication 1, dans laquelle les polyépoxydes comprennent des époxy polyéthers.

3. Composition suivant la revendication 1, dans laquelle les polyépoxydes comprennent des éthers polyglycidyliques d'alcools polyvalents.

4. Composition suivant la revendication 1, dans laquelle les polyépoxydes sont des esters polyglycidyliques d'acides polycarboxyliques.

5. Composition suivant la revendication 1, dans laquelle les polyépoxydes proviennent d'une époxydation de composés alicycliques oléfiniquement insaturés.

6. Composition suivant la revendication 1, dans laquelle les polyépoxydes contiennent des groupes oxyalkylène dans la molécule d'époxy.

7. Composition suivant la revendication 1, dans laquelle les polyépoxydes comprennent des résines époxy novolaques.

8. Composition suivant l'une quelconque des revendications précédentes, dans laquelle le polyépoxyde est présent en une quantité allant de 15 à 50 % en poids par rapport au poids total de la composition.

9. Composition suivant l'une quelconque des revendications précédentes, dans laquelle le polymère de polyester thermoplastique est essentiellement exempt d'unités aromatiques.

10. Composition suivant l'une quelconque des revendications précédentes, dans laquelle le polymère de polyester thermoplastique est présent en une quantité allant de 3 à 30 % en poids par rapport au poids total de la composition.

11. Composition suivant l'une quelconque des revendications précédentes, dans laquelle l'agent de durcissement précité est une amine polyfonctionnelle aliphatique, cycloaliphatique ou aromatique.

12. Composition suivant l'une quelconque des revendications précédentes, dans laquelle l'agent de durcissement précité est présent dans la composition en une quantité allant de 1 à 50 % en poids par rapport au poids total de la composition.

13. Composition suivant l'une quelconque des revendications précédentes, dans laquelle les particules inorganiques sont choisies parmi des particules ayant une morphologie sphérique, une morphologie irrégulière ou une morphologie tabulaire, aciculaires et leurs mélanges.

14. Composition suivant l'une quelconque des revendications précédentes, dans laquelle les particules inorganiques ont une taille de particule avant incorporation dans la composition allant de 5 à 200 microns.

15. Composition suivant l'une quelconque des revendications précédentes, dans laquelle les particules inorganiques comprennent du mica, du carbonate de calcium, de la dolomite, du talc et/ou du métasilicate de calcium.

16. Composition suivant l'une quelconque des revendications précédentes, dans laquelle les particules inorganiques sont présentes en une quantité allant de 5 à 65 % en poids par rapport au poids total de la composition.

17. Composition suivant l'une quelconque des revendications précédentes, qui peut être appliquée par pulvérisation.

18. Composition suivant l'une quelconque des revendications précédentes, comprenant de plus un ou plusieurs copolymères d'alkylène diène.

19. Composition suivant l'une quelconque des revendications précédentes, dans laquelle les microparticules inorganiques sont présentes en une quantité suffisante pour conférer des propriétés de résistance à la corrosion telles que mesurées suivant la Méthode d'Essai de Chrysler LP-463PB-10-01 qui sont supérieures aux propriétés de résistance à la corrosion de la même composition qui ne contient pas lesdites microparticules inorganiques.

20. Composition suivant la revendication 19, dans laquelle les microparticules inorganiques sont présentes dans la composition en une quantité allant de 0,1 à 5 % en poids par rapport au poids total de la composition.

21. Composition suivant l'une quelconque des revendications précédentes, dans laquelle les microparticules inorganiques ont une taille de particule avant incorporation dans la composition allant de 3 à 150 microns.

22. Composition suivant l'une quelconque des revendications précédentes, comprenant de plus un ou plusieurs composés métalliques comprenant un cation choisi parmi les cations de zinc, aluminium, magnésium, calcium, strontium, titane, zirconium, césium, yttrium et fer, et un anion choisi parmi le phosphate, le polyphosphate, le phosphite, le molybdate, le sulfonate, le tungstate, le borate, le borosilicate, le silicate et le cyanamide.

23. Composite multicouche comprenant une couche primaire soudable formée à partir d'une composition primaire soudable, et une seconde couche ayant des propriétés d'étanchéité et d'insonorisation améliorées formée à partir d'une seconde composition suivant l'une quelconque des revendications 1 à 22, sur au moins une partie de la couche primaire soudable.

24. Composite multicouche suivant la revendication 23, dans lequel la couche primaire soudable est formée à partir d'une composition primaire soudable comprenant :
(A) un liant résineux comprenant :
(1) au moins un polymère contenant des groupes fonctionnels, et
(2) au moins un agent de durcissement comportant des groupes fonctionnels réactifs avec les groupes fonctionnels de (1); et
(B) au moins un pigment électroconducteur dispersé dans le liant résineux (A).

25. Substrat métallique revêtu comprenant :
un substrat métallique, et une composition suivant l'une quelconque des revendications 1 à 22 ayant des propriétés d'étanchéité et d'insonorisation sur au moins une partie du substrat.

26. Substrat métallique revêtu comprenant :
un substrat métallique;
une couche primaire soudable formée à partir d'une composition primaire soudable déposée sur au moins une partie du substrat; et
une seconde couche formée à partir d'une seconde composition ayant des propriétés d'étanchéité et d'insonorisation suivant l'une quelconque des revendications 1 à 22, déposée sur au moins une partie de la couche primaire soudable.

27. Substrat métallique revêtu suivant la revendication 26, dans lequel la première couche primaire soudable est formée à partir d'une composition primaire soudable comprenant :
(A) un liant résineux comprenant :
(1) au moins un polymère contenant des groupes fonctionnels, et
(2) au moins un agent de durcissement comportant des groupes fonctionnels réactifs avec les groupes fonctionnels de (1); et
(B) au moins un pigment électroconducteur dispersé dans le liant (A).

28. Substrat métallique revêtu suivant l'une quelconque des revendications 25 à 27, dans lequel le substrat métallique est choisi dans le groupe comprenant un métal ferreux, un métal non ferreux et leurs combinaisons.

29. Procédé de formation d'un revêtement ayant des propriétés d'étanchéité et d'insonorisation sur un substrat métallique comprenant les étapes de :
(a) formation d'un substrat métallique comportant deux surfaces majeures;
(b) application d'une composition suivant l'une quelconque des revendications 1 à 19 sur au moins une partie d'une des surfaces majeures du substrat;
(c) durcissement de la composition appliquée,
dans lequel le substrat revêtu de l'étape (c) a une valeur d'insonorisation plus grande qu'un facteur de dissipation d'Oberst de 0,030 tel que mesuré à 200 Hz à 25°C suivant la méthode ASTM E-756-98.

30. Procédé suivant la revendication 29, dans lequel la composition durcie a une épaisseur de film sec allant de 10 à 300 millièmes de pouce (250 à 7 500 micromètres).

31. Procédé suivant la revendication 29, dans lequel le substrat de l'étape (c) est chauffé à une température allant de 90°C à 180°C.
